# EUROPÄISCHE PATENTSCHRIFT

(11) **EP 2 963 861 B1**
(45) Veröffentlichungstag und Bekanntmachung des Hinweises auf die Patenterteilung: **25.12.2019**
(21) Anmeldenummer: 15171165.2
(22) Anmeldetag: 09.06.2015
(51) Int. Cl.: H04L 12/28, H04W 4/00, H04L 12/911

(54) **STEUERUNG VON FUNKVERBINDUNGEN BEI DER GEBÄUDEAUTOMATION**
CONTROL OF RADIO LINKS IN BUILDING AUTOMATION
COMMANDE DE LIAISONS RADIO POUR UN SYSTEME DOMOTIQUE

(30) Priorität: 04.07.2014 DE 102014109380
(43) Veröffentlichungstag der Anmeldung: 06.01.2016
(73) Patentinhaber: Deutsche Telekom AG, 53113 Bonn (DE)
(72) Erfinder: Hund, Martin, 56370 Rettert (DE); Unterschütz, Thomas, 65443 Weiterstadt (DE); Sinning, Thorsten, 52080 Aachen (DE)
(74) Vertreter: Braun-Dullaeus Pannen Emmerling Patent- & Rechtsanwaltspartnerschaft mbB

(56) Entgegenhaltungen:
- EP-A1- 1 662 730
- US-A1- 2013 089 004
- "Channel Access Rules for SRDs", , 1. November 2012 (2012-11-01), Seiten 1-105, XP055222326, Kamp-Lintfort, Germany Gefunden im Internet: URL:http://www.bundesnetzagentur.de/Shared Docs/Downloads/DE/Sachgebiete/Telekommunik ation/Unternehmen_Institutionen/Koexistenz studie_EN.pdf?__blob=publicationFile&v=2 [gefunden am 2015-10-20]

## Beschreibung

Die Erfindung betrifft ein Verfahren und ein System zur Steuerung mehrerer insbesondere bidirektionaler Funkverbindungen im Rahmen der Automation eines geschlossenen Lebensraumes, beispielsweise einer Wohnung, eines Gebäudes oder eines Gebäudekomplexes, und damit der Datenaufnahme und Datenübertragung innerhalb des Lebensraumes. Dabei werden Funkverbindungen zwischen jeweils einer Senderpaarung umfassend einen raumseitigen Sender und einen Gerätesender aufgebaut. Jede der Funkverbindungen wird in einer koordinierten Weise auf derselben Funkfrequenz und in einem gemeinsamen räumlichen Sendebereich abgewickelt, so dass es bei Überlastung zu Überlagerungen kommen kann. Um die Gefahr von Überlastungen auf der einen Frequenz durch eine Senderpaarung zu vermeiden, ist jeder Senderpaarung ein in seiner Größe vorgegebenes individuelles Sendekontingent zugeordnet.

Schon an dieser Stelle sei betont, dass die Automation nicht nur die Steuerung von Funktionen innerhalb eines Raumes umfasst, sondern sich ganz allgemein auf die Steuerung beliebiger Funktionalitäten und auf das Auslesen jeglicher Sensoren innerhalb einer Wohnung, eines Gebäudes oder Gebäudekomplexes erstreckt, soweit hierfür Funkanwendungen der Steuerungstechnik mit geringer Reichweite (Short Range Device, SRD) vorgesehen sind. Das umfasst beispielsweise auch den Betrieb von Alarmanlagen und die Auslese biologischer Parameter von im Raum befindlichen Personen, insbesondere im Rahmen von HealthCare. Insbesondere umfasst die Automation auch Überwachungs-, Steuer-, Regel- und Optimierungseinrichtungen, bei denen alle Sensoren, Aktoren, Bedienelemente, Verbraucher und andere technische Einheiten über ein Bussystem miteinander vernetzt sind.

Aus der EP 1 662 730 A1 ist es bekannt, Sendekontingente sich trotz ihrer geringen Reichweite überlappender Senderpaarungen, die auf derselben Frequenz senden, so zu koordinieren, dass einzelne Sender möglichst nur in den Ruhezeiten der anderen Sender senden.

Die "Channel Access Rules for SRDs", (2012-11-01), Seiten 1-105, XP055222326, Kamp-Lintfort, Germany, offenbaren eine Reihe von Regeln für den Zugang von "Short Range Decvices" (SRD) zu Netzwerken.

Auch die US 2013/0089004 A1 offenbart ein System zur Kontrolle des Zugangs einer Gruppe von Geräten zu einem Netwerk, wobei ein Koordinator die Kommunikation zu Netzwerkknoten ermöglicht.

Grundlegend für die Erfindung ist, dass eine Regulierungsbehörde für die in Frage kommenden Funkanwendungen bestimmte Funkfrequenzbereiche für bestimmte Nutzungen, wie beispielsweise die Gebäudeautomation, durch Senderpaarungen frei gegeben hat. In Deutschland liegt ein solcher Frequenzbereich bei 868 MHz. In den USA ist die Frequenz 915 MHz und weltweit die Frequenz 2,4 GHz frei. Die besonderen Funkanwendungen dürfen auch nur mit kleiner Strahlungsleistung (25 mW) frei genutzt werden, so dass sich eine Reichweite in der Größenordnung von 100m ergibt. Anwendungen aus der Industrie, der Wissenschaft, der Medizin und der Gebäudeautomation teilen sich die Bänder.

Für diese besonderen Frequenzen ist zudem ein bestimmter "Tastgrad", mithin ein Sendekontingent im Bereich zwischen 0% und 100% eines zeitlichen Kontingentes auf dieser Frequenz, vorgegeben, der im Fall der Frequenz von 868 MHz allerdings auf <1% limitiert ist. Das bedeutet, dass ein jeder Sender nur bis zu 1% der freien Kapazität dieser gemeinsam genutzten "freien" Frequenz für sich beanspruchen darf. Eine weitere Auflage der Netzagentur für einen Funksender ist die Begrenzung der Sendeleistung auf 25 mW.

Nun sind aus dem Stand der Technik Verfahren bekannt, die Funkanwendungen auf diesen Frequenzen nur im Rahmen des durch den Tastgrad vorgegebenen Sendekontingentes zulassen, so dass es bei den zufällig über die Zeit verteilten Zugriffen wegen der geringen Reichweiten und der begrenzten Anzahl von Sendern innerhalb dieser Reichweiten nur mit geringer Wahrscheinlichkeit zu Überschneidungen auf dem gemeinsamen Frequenzband kommt. Allerdings sind Überschneidungen nicht völlig ausgeschlossenen, so dass unter Umständen ein Sender die Kommunikation eines anderen Senders dominieren oder sogar verhindern kann.

Nach dem Stand der Technik wird die Gefahr des gleichzeitigen Sendens auf der einen Frequenz dadurch weiter gemindert, dass jedem Sender eine maximale Sendezeit unterhalb des Tastgrades, beispielsweise von 10 Sekunden innerhalb eines bestimmten Referenzzeitraums von beispielsweise einer Stunde zugebilligt wird. Damit hält der Sender während des Referenzzeitraums eine "Schweigezeit" ein, so dass alle anderen Sender während des Referenzzeitraums die Schweigezeiten der anderen Sender für sich nutzen können. Dieses Verfahren funktioniert jedoch nur, wenn sich alle Sender den strengen Vorgaben "freiwillig" unterwerfen.

Problematisch an den bekannten Verfahren ist jedoch, dass alle Sender als voneinander unabhängige Einheiten behandelt werden, obwohl im Kontext gerade der Raum- oder Gebäudeautomation wegen der zum Teil unmittelbaren Nähe eine Abhängigkeit zwischen den Sendern besteht. Diese Abhängigkeit ist beispielsweise durch die Anordnung der Sender innerhalb eines gemeinsamen Gerätes gegeben. Sobald eine solche Abhängigkeit besteht, lassen sich die in dem Gerät befindlichen Sender nicht mehr ohne Weiteres als einzelne Sender in das bekannte Verfahren integrieren. Vielmehr nimmt in diesem Fall das gesamte Gerät mit allen seinen Sendern an dem Verfahren teil.

Aufgabe der Erfindung ist es nunmehr, ein Verfahren zur Automation eines geschlossenen Lebensraumes, wie einer Wohnung, eines Gebäudes oder eines Gebäudekomplexes, vorzuschlagen, mit dem sich auf technisch einfache und kostengünstige Weise und unter Einbeziehung bestehender Abhängigkeiten eine optimierte Nutzung der vorhandenen Funkressourcen bei Vermeidung von störenden Überlagerungen durch zeitgleiches Senden auf derselben Frequenz realisieren lässt. Aufgabe ist es weiterhin, ein entsprechendes System zur Umsetzung des Verfahrens vorzuschlagen.

Diese Aufgaben werden durch das Verfahren nach Anspruch 1 und das System nach Anspruch 7 gelöst. Bevorzugte Ausgestaltungen ergeben sich aus den jeweiligen Unteransprüchen.

Die Grundidee des beanspruchten Verfahrens zur Steuerung mehrerer Funkverbindungen im Rahmen der Automation des Raumes liegt einfach ausgedrückt darin, dass aus mehreren ursprünglich voneinander völlig unabhängiger Senderpaarungen jeweils einer der beiden Partner ausgewählt wird und alle ausgewählten Partner zu einer Sendergruppe zusammengefasst werden. Die Funkverbindungen dieser Sendergruppe wird dann erfindungsgemäß unter eine gemeinsame Verwaltung durch eine übergeordnete Basisstation gestellt. Dieser Sendergruppe wird ein gemeinsames Sendekontingent zugeteilt, das dann zeitlich abgestimmt auf die Sendeaktivitäten der einzelnen raumseitigen Sender aufgeteilt werden kann. Die Basisstation übernimmt damit die zeitliche Koordination der Sendergruppe innerhalb der räumlichen Umgebung insbesondere in dem Sinne, dass jeder Sender ausreichend Zeit für das Versenden seines Signales erhält bevor der nächste Sender der Sendergruppe an der Reihe ist.

Als gemeinsames Sendekontingent wird eines mit der Größe genutzt, wie sie durch die Regulierungsvorschriften für das entsprechende Frequenzband für eine Senderpaarung fest vorgegeben ist. Dieses gemeinsame Sendekontingent wird im Rahmen des Verfahrens allenfalls in besonderen Ausnahmesituationen, wie beispielsweise in Notfällen, überschritten. Dabei ist es für das Verfahren erheblich, dass die Sende- und Empfängerpaare auf demselben Frequenzband senden. Es ist hingegen unerheblich, ob Sende- und Empfängerpaare unterschiedliche Kommunikationsprotokolle verwenden und ob die Kommunikation zwischen einem Sende- und Empfängerpaar uni- oder bidirektional ist. Für das Verfahren ist es auch unerheblich, ob die Kommunikation zwischen einem gebäudeseitigen Sender und vielen gegenüberliegenden Sende/Empfängern, also als Multicast oder Broadcast, erfolgt. Durch das erfindungsgemäße Verfahren können Überlagerungen im Sinne gleichzeitigen Sendens verschiedener Sender auf derselben Frequenz, mithin das zeitgleiche Beanspruchen derselben Funkressource, vermieden werden.

Anspruchsgemäß drückt sich die Erfindung so aus, dass eine Sendergruppe raumseitiger respektive gebäudeseitiger Sender ("raumseitig" und "gebäudeseitig" werden nachfolgend synonym genutzt) unter der Herrschaft einer gemeinsamen Basisstation zum Zwecke der zentralen Verwaltung zusammengefasst wird und dass dieser Sendergruppe der von der Basisstation verwalteten raumseitigen Sender ein gemeinsames Sendekontingent zugeteilt wird. Vice versa sind als raumseitige Sender genau diejenigen Sender definiert, die in der Sendergruppe zusammengefasst und von der Basisstation koordiniert sind. Die jeweils anderen Sender der Paarungen sind von der Kontingentierung durch die Basisstation nicht unmittelbar betroffen.

Die Basisstation hat dann erfindungsgemäß die Aufgabe, die Sendeaktivitäten der Sendergruppe im Rahmen des gemeinsamen Sendekontingentes zu koordinieren. Dabei organisiert die Basisstation die zeitliche Abfolge der Sendeaktivitäten der gruppierten raumseitigen Sender vorteilhafterweise so, dass keine gleichzeitigen Funkverbindungen der Senderpaarungen bestehen und damit Störungen durch Interferenzen vermieden werden. Um die Steuerung vermittels der Basisstation zu ermöglichen, weisen die raumseitigen Sender entsprechende Interfaces auf.

Dabei bedeutet das Merkmal "Basisstation" im erfindungsgemäßen Zusammenhang nicht zwangsläufig die physikalische Anordnung der gebäudeseitigen Sender innerhalb einer Basisstation und deren Gerätegehäuses. Stattdessen kann die Basisstation auch als eine virtuelle oder logische Einheit verstanden werden, die maßgeblich "lediglich" durch eine Sendergruppe bestimmt wird.

Der wesentliche Vorteil der zentralen Steuerung der Sendeaktivitäten der Sendergruppe durch die Basisstation liegt darin, dass sie jeweils einer Senderpaarung die Funkverbindung erlaubt und so eine störende Überlagerung vermieden werden kann. Auf diese Weise können vorhandene Funkressourcen optimal und störungsfrei genutzt werden. Ein weiterer Vorteil ist, dass der Basisstation ein Sendekontingent zur Verfügung gestellt werden kann, das dem der von einer Regulierungsbehörde vorgegebenen entspricht. Mit der Verwaltung durch die Basisstation wird somit eine regelkonforme Abwicklung der Funkverbindungen ermöglicht. Mit der Erfindung ist in gewisser Weise aber auch ein "regelkonformes" Hinwegsetzen über die Regeln möglich, da der zusammengefassten und von der Basisstation verwalteten Sendergruppe ein größeres Sendekontingent als einem einzelnen raum- oder gebäudeseitigem Sender zugeordnet werden kann, so dass eine priorisierte Senderpaarung von einem größeren Sendekontingent profitieren kann, als es ihr sonst zustünde.

Schließlich gibt es insbesondere in der Raum- bzw. Gebäudeautomation Fälle, in denen wichtige, vitale Funktionen, beispielsweise bestimmte Maßnahmen nach dem Anschlagen eines Rauchmelders, mit höchster Priorität und unbedingt durchgeführt werden müssen. Gleichzeitig kann es aber sein, dass beteiligte Geräte ihre Sendezeit bereits ausgeschöpft haben. In einem solchen Fall wird sich das Verfahren über das Reglement hinwegsetzen und die Steuerung der entsprechenden Senderpaarungen derart vornehmen, dass die wichtigen vitalen Funktionen durch die entsprechenden Geräten dennoch ausgeführt werden.

Erfindungsgemäß ordnet die Basisstation den Senderpaarungen Prioritäten zu und berücksichtigt diese bei der Koordination der Sendeaktivität. Alternativ ordnet die Basisstation den Befehlen, die zur Anforderung von Sendeaktivitäten einzelner Gerätesender führen, Prioritäten zu und berücksichtigt diese bei der Ausführung dieser priorisierten Befehle bei der Nutzung des Sendekontingents.

Erfindungsgemäß wird die von der Basisstation verwaltete Sendergruppe jedoch als ein einziges Gerät im Sinne der Regulierung verstanden, dem auch nur ein einziges individuelles Sendekontingent als gemeinsames Sendekontingent zugeordnet wird. Dabei ist die Aufteilung auch nur eines einzigen solchen Sendekontingentes für die Zwecke einer Gebäudeautomation allemal ausreichend, da in diesem technischen Zusammenhang lediglich Signale von wenigen Mikrosekunden Dauer gesendet werden. Mit dieser strengen Kontingentierung werden jedoch Diskussionen darüber vermieden, inwieweit eine Sendergruppe gegenüber der Regulierungsbehörde als ein Gerät oder als mehrere Geräte zu gelten hat.

In einer weiteren vorteilhaften Ausführungsform stellt das Verfahren Schritte zur Initialisierung bereit, um zunächst eigenständige Senderpaarungen in das System der Sendergruppe integrieren zu können. Von solchen Senderpaarungen, die zunächst zum selbstkontrollierten Senden befähigt sind, werden die raum- bzw. gebäudeseitigen Sender im Rahmen des Initialisierungsprozesses in die zentrale Koordination durch die Basisstation eingebunden. Im Rahmen der Initialisierung werden somit die gebäudeseitigen Sender aus einem Betriebszustand, in dem sie die Selbstkontrolle über das Verfahren ausüben, in einen Zustand überführt, in dem sie das Verfahren selber nicht mehr beeinflussen. Damit wird die Basisstation auch befähigt, zumindest die Sendeaktivitäten der zugänglichen, gebäudeseitigen Sender zu autorisieren und/oder zu initiieren. In beiden Fällen wird ein Vorgang insbesondere nur dann initiiert oder autorisiert, wenn der Sender sich nicht in der "Schweigezeit" befindet.

Gebäudeseitige Sender ohne die Fähigkeit zur Selbstkontrolle des Verfahrens können ebenfalls verwendet werden. Sie gelten dann ohne explizite Übernahme als zur Steuerung übernommen. Gebäudeseitige Sender, die zwar die Fähigkeit zur Selbstkontrolle des Verfahrens besitzen, aber bei denen die Selbstkontrolle zum Zeitpunkt Übernahme deaktiviert ist, gelten ebenfalls ohne explizite Übernahme als zur Steuerung übernommen. Vorteilhafterweise stellt das Verfahren auch entsprechende Schritte zum Herauslösen eines Senderpaares aus einer Sendergruppe bereit. Dabei sind die Senderpaarungen zunächst in die zentrale Koordination der Basisstation eingebunden, bevor sie zum selbstkontrollierten Senden aus der Sendergruppe ausgegrenzt werden.

Wenn es sich um bidirektionale Funkverbindungen handelt, kann in einer zu bevorzugenden Ausführungsform über die Steuerung eines raum- bzw. gebäudeseitigen Senders indirekt auch der Sendeaufwand des gepaarten Gerätesenders in gewissem Maße gesteuert werden. Beispielsweise kann bei drohender Überschreitung des Sendekontingents die Sendeaktivität mittelbar dadurch verringert werden, dass die Basisstation den Sender weniger Befehle ausführen lässt oder Rückmeldungen unterdrücken lässt. Damit lässt sich quasi mittelbar auch der Gerätesender in die durch die Basisstation verwaltete Sendergruppe eingliedern. Das Sendekontingent des Gerätesenders geht gemeinsam mit dem des raumseitigen Senders dieser Senderpaarung in dem der Sendergruppe auf.

Der gebäudeseitige Sender kann eine abgeschlossene Sendeaktivität mittels eines "Acknowledgements" an die Verwaltung der gebäudeseitigen Sender der Basisstation zurückmelden. Die Rückmeldung kann beispielsweise die Dauer der für einen Sendevorgang benötigten Sendezeit sein. Die Rückmeldung sollte zumindest die Information beinhalten, dass ein Sendevorgang stattgefunden hat. Falls die Kommunikation initiiert worden ist, muss der gebäudeseitige Sender keine Information zurückliefern.

In einer besonders einfachen Ausführungsform arbeitet das erfindungsgemäße Verfahren zeitgesteuert, wobei die Sendezeiten der einzelnen Kommunikationen einer Sendergruppe aufsummiert werden. Überschreitet diese Summe einen Schwellwert, wird das Versenden von weiteren Nachrichten bis zum Ablauf des Referenzintervalls vorteilhafterweise unterbunden. Die Verwaltung der gebäudeseitigen Sender kann aber auch auf der Basis anderer Metriken, die beispielsweise auf Verbrauch und Schwellwert der Bandbreite und/oder Verbrauch und Schwellwert der Datenmenge erfolgen.

Es ist nicht ausgeschlossen, dass eine Basisstation neben den gebäudeseitigen Sendern, die sich dem Verfahren unterwerfen, weitere Sender umfasst, die nicht dem Verfahren unterworfen sind. Dabei ist es unerheblich, ob diese Sender von der Basisstation in gleicher Weise verwaltet und gesteuert werden, wie deren gebäudeseitigen Sender.

Die Verwaltung der gebäudeseitigen Sender umfasst die Prozesse zur Übernahme der gebäudeseitigen Sender zur Steuerung. Weiter umfasst sie die Steuerung der Kommunikation der gebäudeseitigen Sender. Insbesondere wird deren Kommunikation initiiert beziehungsweise autorisiert. Die Rückmeldung der Gerätesender wird entgegengenommen und dem Verfahren entsprechend mit auf das Sendekontingents des Dedizierten Gerätes angerechnet.

Die Erfindung wird nachfolgend anhand der Figuren näher beschrieben. Es zeigen:
- **Figur** 1: eine Prinzipskizze eines Systems zur Automation eines Raumes und
- **Figur** 2: die prinzipielle innere Struktur einer Basisstation

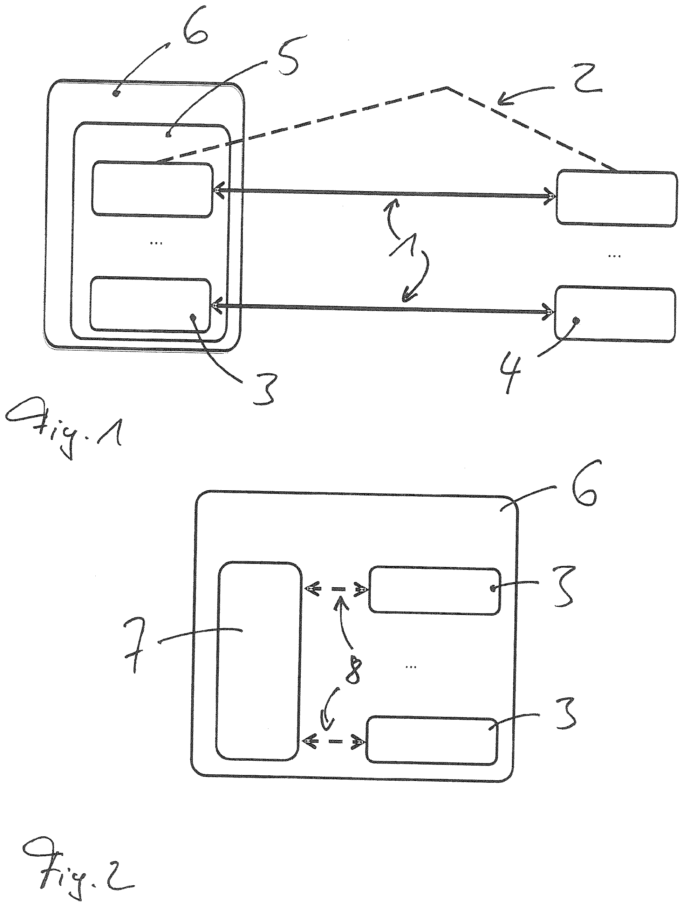

Figur 1 zeigt ein System zur Automation eines geschlossenen Lebensraumes, wie einer Wohnung, eines Gebäudes oder Gebäudekomplexes. In dem Raum bestehen in diesem Fall zwei bidirektionale Funkverbindungen 1, wobei durch die Platzhalter ("...") angedeutet ist, dass noch mehr Funkverbindungen hinzukommen können. Jede der Funkverbindungen 1 besteht zwischen einer Senderpaarung 2 umfassend einen raumseitigen Sender 3 und einen Gerätesender 4. Jedem Sender der Senderpaarung ist zunächst ein individuelles Sendekontingent zugewiesen.

Die raumseitigen Sender 3 sind zu einer Sendergruppe 5 zusammengefasst, wobei die Sendeaktivitäten der in der Sendergruppe 5 zusammengefassten raumseitigen Sender 3 von einer gemeinsamen Basisstation 6 verwaltet wird. Die Basisstation 6 koordiniert damit alle Funkverbindungen, die auf derselben Funkfrequenz und in dem Sendebereich des gemeinsamen Raumes abgewickelt werden.

Erfindungsgemäß wird allen in der Sendergruppe 5 zusammengefassten raumseitigen Sendern 3 ein gemeinsames Gruppen-Sendekontingent zugeteilt, das im vorliegenden Fall dieselbe Größe hat, wie ein individuelles Sendekontingent eines einzelnen Senders. Die Koordination der in der Sendergruppe 5 zusammengefassten raumseitigen Sender 3 durch die Basisstation 6 besteht nun darin, dass diese das Gruppen-Sendekontingent verwaltet und die die Sendeaktivitäten der Sendergruppe auf dieses Gruppen-Sendekontingent beschränkt, wobei Übertretungen nur in Notfällen gestattet sind.

Figur 2 zeigt die innere Struktur einer Basisstation 6, die ein Verwaltungselement 7 zur Verwaltung einer Sendergruppe mit zwei raumseitigen Sendern 3 aufweist. Dabei ist durch die Platzhalter ("... ") angedeutet, dass noch mehr raumseitige Sender hinzukommen können. Die Verbindungspfeile 8 zwischen dem Verwaltungselement und den raumseitigen Sendern 3 illustriert die Aktivitäten zur Verwaltung der raumseitigen Sender 3.

## Patentansprüche

1. Verfahren zur Steuerung mehrerer Funkverbindungen (1) im Rahmen einer Automation innerhalb eines geschlossenen Lebensraumes, wie eines Gebäudes oder Gebäudekomplexes, wobei eine Funkverbindung zwischen einer Senderpaarung (2) umfassend einen raumseitigen Sender (3) und einen Gerätesender (4) aufgebaut wird, wobei alle Funkverbindungen (1) in koordinierter Weise auf derselben Funkfrequenz und in einem gemeinsamen Sendebereich abgewickelt werden, wobei einer Senderpaarung (2) zunächst ein individuelles Sendekontingent zugeordnet ist, wobei die eine Funkfrequenz von einer Kontrollbehörde zum Zwecke der Gebäudeautomation im Rahmen der individuellen Sendekontingente frei gegeben ist,
**dadurch gekennzeichnet,**
**dass** die raumseitigen Sender (3) zu einer Sendergruppe (5) zusammengefasst werden, die von einer gemeinsamen Basisstation (6) verwaltet wird,
**dass** allen in der Sendergruppe (5) zusammengefassten raumseitigen Sendern (3) ein gemeinsames zeitliches Gruppen-Sendekontingent zugeteilt wird, das der Größe des von der Kontrollbehörde vorgegeben individuellen Sendekontingentes entspricht,
**dass** die Basisstation (6) die Sendeaktivitäten der Sendergruppe (5) im Rahmen des gemeinsamen zeitlichen Gruppen-Sendekontingentes koordiniert und die Sendeaktivitäten der Sendergruppe auf das Gruppen-Sendekontingent beschränkt,
wobei die Basisstation (6) den Senderpaarungen (2) innerhalb der Sendergruppe (5) Prioritäten zuordnet und bei der Koordination der Sendeaktivität berücksichtigt oder
wobei die Basisstation (6) Befehlen, die zur Anforderung von Sendeaktivitäten einzelner Gerätesender (4) führen, Prioritäten zuordnet und die Ausführung der priorisierten Befehle bei der Nutzung des Sendekontingents berücksichtigt.

2. Verfahren nach Anspruch 1,
**dadurch gekennzeichnet,**
**dass** die Basisstation (6) die zeitliche Abfolge der Sendeaktivitäten der Sendergruppe (5) zeitlich derart koordiniert, dass keine gleichzeitigen Funkverbindungen (1) bestehen.

3. Verfahren nach Anspruch 1 oder 2,
**dadurch gekennzeichnet,**
**dass** die Funkverbindungen (1) auf der von der Regulierungsbehörde vorgegebenen Frequenz von 868 MHz mit entsprechend begrenzter Sendeleistung abgewickelt werden.

4. Verfahren nach einem der vorherigen Ansprüche,
**dadurch gekennzeichnet,**
**dass** die Senderpaarungen (2) zunächst zum selbstkontrollierten Senden befähigt sind, bevor zumindest die raumseitigen Sender (3) im Rahmen eines Initialisierungsprozesses in Sendergruppe (5) und damit in die zentrale Koordination der Basisstation (6) eingebunden werden, wobei zumindest die Sendeaktivitäten innerhalb der Sendergruppe (5) von der Basisstation (6) autorisiert und/oder initiiert werden.

5. Verfahren nach einem der vorherigen Ansprüche,
**dadurch gekennzeichnet,**
**dass** die Senderpaarungen (2) in die zentrale Koordination der Basisstation (6) eingebunden sind, bevor sie zum selbstkontrollierten Senden aus der Sendergruppe (5) ausgegrenzt werden.

6. Verfahren nach einem der vorherigen Ansprüche,
**dadurch gekennzeichnet,**
**dass** eine abgeschlossene Sendeaktivität von einem Gerätesender (4) an die Basisstation (6) rückgemeldet wird.

7. System zur Gebäudeautomation und zur Durchführung des Verfahrens nach einem der vorherigen Ansprüche, aufweisend Senderpaarungen (2) zwischen jeweils einem raumseitigen Sender (3) und einem Gerätesender (4) und aufweisend eine Basisstation (6) zur zentralen Verwaltung von in einer Sendergruppe (5) zusammengefassten raumseitigen Sendern (3),
**dadurch gekennzeichnet,**
**dass** der Sendergruppe (5) der raumseitigen Sender (3) ein gemeinsames Gruppen-Sendekontingent zugeteilt ist, dessen Größe der Größe des von der Kontrollbehörde vorgegeben individuellen Sendekontingentes entspricht, wobei die von der Basisstation koordiniert verwaltete Sendergruppe ein einziges Gerät im Sinne der Regulierung der Kontrollbehörde ist,
wobei den Senderpaarungen (2) innerhalb der Sendergruppe (5) von der Basisstation Prioritäten zugeordnet sind, die bei der Koordination der Sendeaktivität berücksichtigt werden,
wobei Befehlen, die zur Anforderung von Sendeaktivitäten einzelner Gerätesender (4) führen, von der Basisstation (6) Prioritäten zuordnet sind, wobei die Ausführung der priorisierten Befehle bei der Nutzung des Sendekontingents berücksichtigt werden.

## Claims

1. A method for controlling several radio connections (1) within the framework of automation inside of an enclosed living space, such as a building or building complex, wherein a radio connection is built up between a transmitter pair (2) comprising a room-side transmitter (3) and a device transmitter (4), wherein all radio connections (1) are completed in a coordinated manner on the same radio frequency and in a shared transmission range, wherein a transmitter pair (2) initially has allocated to it an individual transmitting contingent, wherein the one radio frequency is released by a control authority for purposes of building automation within the framework of the individual transmitting contingent,
**characterized in that**
the room-side transmitters (3) are combined into a transmitter group (5), which is managed by a shared base station (6),
all room-side transmitters (3) combined into the transmitter group (5) have allocated to them a shared chronological group transmitting contingent, which corresponds to the size of the individual transmitting contingent prescribed by the control authority,
the base station (6) coordinates the transmitting activities of the transmitter group (5) within the framework of the shared chronological group transmitting contingent, and limits the transmitting activities of the transmitter group to the group transmitting contingent,
wherein the base station (6) allocates priorities to the transmitter pairs (2) within the transmitter group (5), and takes them into account during coordination of the transmitting activity, or
wherein the base station (6) allocates priorities to commands that lead to the request for transmitting activities by individual device transmitters (4), and considers the execution of prioritized commands during use of the transmitting contingent.

2. The method according to claim 1,
**characterized in that**
the base station (6) chronologically coordinates the chronological sequence of transmitting activities by the transmitter group (5) in such a way that there are no simultaneous radio connections (1).

3. The method according to claim 1 or 2,
**characterized in that**
the radio connections (1) are completed at the frequency of 868 MHZ prescribed by the regulating authority with a correspondingly limited transmission power.

4. The method according to one of the preceding claims,
**characterized in that**
the transmitter pairs (2) are initially capable of self-controlled transmission before at least the room-side transmitters (3) are integrated into the transmitter group (5), and thus into the central coordination of the base station (6), within the framework of an initialization process, wherein at least the transmitting activities within the transmitter group (5) are authorized and/or initiated by the base station (6) .

5. The method according to one of the preceding claims,
**characterized in that**
the transmitter pairs (2) are integrated into the central coordination of the base station (6), before they are excluded from the transmitter group (5) for self-controlled transmission.

6. The method according to one of the preceding claims,
**characterized in that**
a concluded transmitting activity is reported back to the base station (6) by a device transmitter (4).

7. A system for automating buildings and implementing the method according to one of the preceding claims, with transmitter pairs (2) between a respective transmitter within the room (3) and a device transmitter (4), and with a base station (6) for centrally managing transmitters within a room (3) combined into a transmitter group (5),
**characterized in that**
the transmitter group (5) of the transmitters within the room (3) has allocated to it a shared group transmitter contingent, the size of which corresponds to the size of the individual transmitter contingent prescribed by the control authority, wherein the transmitter group managed in a coordinated manner by the base station is a single device within the meaning of control authority regulation,
wherein the transmitter pairs (2) within the transmitter groups (5) have allocated to them priorities by the base station, which are taken into account when coordinating the transmission activities, wherein commands that lead to the requesting of transmission activities for individual device transmitters (4) have allocated to them priorities by the base station (6), wherein the execution of the prioritized commands is considered when using the transmitter contingent.

## Revendications

1. Procédé de commande de plusieurs liaisons radio (1) dans le cadre d'une automatisation à l'intérieur d'un espace de vie clos, comme d'un bâtiment ou d'un complexe de bâtiments, sachant qu'une liaison radio est établie entre une association d'émetteurs (2) comprenant un émetteur du côté local (3) et un appareil émetteur (4), sachant que toutes les liaisons radio (1) sont réalisées d'une manière coordonnée à la même fréquence radio et dans une zone d'émission commune, sachant qu'un contingent d'émission individuel est d'abord attribué à une association d'émetteurs (2), sachant qu'une fréquence radio autorisée par une autorité de contrôle dans le but de l'automatisation de bâtiments dans le cadre des contingents d'émission individuels,
**caractérisé en ce que**
les émetteurs du côté local (3) sont réunis en un groupe d'émetteurs (5), qui est administré par une station de base commune (6),
**en ce qu'**un contingent d'émission de groupes temporel commun est attribué à tous les émetteurs (3) du côté local réunis dans le groupe d'émetteurs (5), qui correspond à la taille du contingent d'émission individuel prédéfini par l'autorité de contrôle,
**en ce que** la station de base (6) coordonne les activités d'émission du groupe d'émetteurs (5) dans le cadre du contingent d'émission de groupes temporel commun et limite les activités d'émission du groupe d'émetteurs au contingent d'émission de groupes,
sachant que la station de base (6) attribue des priorités aux associations d'émetteurs (2) à l'intérieur du groupe d'émetteurs (5) et en tient compte lors de la coordination de l'activité d'émission, ou sachant que la station de base (6) attribue des priorités aux ordres qui mènent à l'exigence d'activités d'émission des appareils émetteurs individuels (4) et prend en considération l'exécution des ordres priorisés lors de l'utilisation du contingent d'émission.

2. Procédé selon la revendication 1,
**caractérisé en ce que**
la station de base (6) coordonne dans le temps le déroulement temporel des activités d'émission du groupe d'émetteurs (5) de telle manière qu'il n'y ait pas de liaisons radio (1) simultanées.

3. Procédé selon la revendication 1 ou 2,
**caractérisé en ce que**
les liaisons radio (1) sont réalisées à la fréquence de 868 MHz prédéfinie par l'autorité de régulation avec une puissance d'émission limitée de façon correspondante.

4. Procédé selon l'une quelconque des revendications précédentes,
**caractérisé en ce que**
les associations d'émetteurs (2) sont d'abord qualifiées pour l'émission autocontrôlée avant qu'au moins les émetteurs du côté local (3) ne soient intégrés dans un groupe d'émetteurs (5) dans le cadre d'un processus d'initialisation et de ce fait dans la coordination centrale de la station de base (6), sachant qu'au moins les activités d'émission à l'intérieur du groupe d'émetteurs (5) sont autorisées et/ou initiées par la station de base (6).

5. Procédé selon l'une quelconque des revendications précédentes,
**caractérisé en ce que**
les associations d'émetteurs (2) sont intégrés dans la coordination centrale de la station de base (6), avant qu'elles ne soient exclues du groupe d'émetteurs (5) pour émission autocontrôlée.

6. Procédé selon l'une quelconque des revendications précédentes,
**caractérisé en ce qu'**
une activité d'émission achevée est renvoyée par un émetteur appareil (4) à la station de base (6).

7. Système destiné à l'automatisation de bâtiments et à l'exécution du procédé selon l'une quelconque des revendications précédentes, comportant des associations d'émetteurs (2) entre respectivement un émetteur du côté local (3) et un appareil émetteur (4) et comportant une station de base (6) pour l'administration centrale d'émetteurs (3) du côté local réunis dans un groupe d'émetteurs (5),
**caractérisé en ce qu'**
un contingent d'émission de groupes commun est attribué au groupe d'émetteurs (5) du côté local (3) dont la taille correspond à la taille du contingent d'émission individuel prédéfini par l'autorité de contrôle, sachant que le groupe des émetteurs géré de façon coordonnée par la station de base est un appareil unique au sens de la régulation de l'autorité de contrôle, sachant que des priorités sont attribuées aux associations d'émetteurs (2) à l'intérieur du groupe d'émetteurs (5) par la station de base, qui sont prises en considération lors de la coordination de l'activité d'émission,
sachant que des priorités sont attribuées par la station de base (6) aux ordres qui mènent à l'exigence d'activités d'émission des appareils émetteurs individuels (4),
sachant que l'exécution des ordres priorisés est prise en considération lors de l'utilisation du contingent d'émission.
